# EUROPEAN PATENT SPECIFICATION

(11) **EP 3 470 134 B1**
(45) Date of publication and mention of the grant of the patent: **03.06.2020**
(21) Application number: 17196352.3
(22) Date of filing: 13.10.2017
(51) Int. Cl.: B01J 13/16, B41M 5/327, C08G 18/32

(54) **A COMPOSITION COMPRISING SOLVENT AND HEAT RESISTANT CAPSULES**
ZUSAMMENSETZUNG MIT LÖSUNGSMITTEL UND HITZEBESTÄNDIGEN KAPSELN
COMPOSITION COMPRENANT UN SOLVANT ET DES CAPSULES RÉSISTANT À LA CHALEUR

(43) Date of publication of application: 17.04.2019
(73) Proprietor: AGFA NV, 2640 Mortsel (BE); Agfa-Gevaert, 2640 Mortsel (BE)
(72) Inventor: GOETHALS, Fabienne, 2640 Mortsel (BE); VAN AERT, Hubertus, 2640 Mortsel (BE)
(74) Representative: Viaene, Kris

(56) References cited:
- US-A1- 2007 098 900
- US-A1- 2016 243 008
- US-A1- 2017 029 639
- DATABASE WPI Week 199350 16 November 1993 (1993-11-16) Thomson Scientific, London, GB; AN 1993-400192 XP002779092, -& JP H05 301447 A (FUJI PHOTO FILM CO LTD) 16 November 1993 (1993-11-16)
- DATABASE WPI Week 199507 29 November 1994 (1994-11-29) Thomson Scientific, London, GB; AN 1995-048520 XP002779093, -& JP H06 328842 A (FUJI PHOTO FILM CO LTD) 29 November 1994 (1994-11-29)
- DATABASE WPI Week 199630 21 May 1996 (1996-05-21) Thomson Scientific, London, GB; AN 1996-295203 XP002779094, -& JP H08 127180 A (FUJI PHOTO FILM CO LTD) 21 May 1996 (1996-05-21)

## Description

### Technical field of the Invention

The present invention relates to capsules, the preparation of the capsules and to compositions containing such capsules.

### Background art for the invention

Encapsulation of water-insoluble components has many applications in agricultural, pharmaceutical, cosmetic, and graphic industries. The reason for encapsulation is usual to be found in making a compartment to either protect the encapsulant from the matrix or the chemical environment. Other applications aim at the controlled or triggered release of the encapsulated compound. In every case, the capsule shell plays a key role.

Laser marking, i.e. providing information on for example packaging or a security document by means of a laser, is gaining interest as an answer to an increasing demand for personalization, mass customization, security, traceability and anticounterfeiting.

A multicolour laser marking technology makes use of leuco dyes, as disclosed in for example EP-A 2648920 (Agfa Gevaert). A leuco dye is a substantially colourless compound, which may react with a developing agent to form a coloured dye.

In water based laser markable compositions, encapsulation technologies may be used to separate the leuco dyes and the developing agents before laser exposure, as disclosed in WO2016/184881 (Agfa Gevaert).

Upon infrared laser exposure, a rupture of the capsules may result in a reaction between the leuco dyes and the developing agents, which then triggers colour formation.

Capsules with a core-shell structure, of which the shell has been generated from a reaction of a multifunctional isocyanate with a multifunctional amine, are well known. For example, WO2013/109268 (FujiFilm Hunt Chemicals) and US6127314 (Fuji Photo Film) describe the preparation of capsules containing leuco dyes using interfacial polymerization between a multifunctional isocyanate and a multifunctional amine.

WO2014/124052 (FujiFilm Hunt Chemicals) discloses capsules containing leuco dyes prepared by interfacial polymerization using an isophorone diisocyanate. Such capsules have an improved humidity dependency of their thermal response.

JPH06328842 discloses microcapsules comprising a core and a shell wherein the shell comprises an isocyanate-based co-polymer of Takenate D-110N and a compound including an active hydrogen. The isocyanate is not isocyanurate based. US 2007/0098900 A1 discloses a microcapsule comprising a shell including a co-polymer of Takenate D-110N with tetraethylenepentamine. WO 2017135086 A1 discloses a microcapsule comprising a shell including a co-polymer of Takenate D-127N and an active hydrogen compound. Takenate D-127N is an aliphatic isocyanurate.

A problem with such capsules is often their limited temperature and solvent resistance.

A poor solvent resistance may limit the compositions wherein the capsules may be used. A minor amount of an organic solvent in the composition may result in a rupture of the capsules. When the encapsulant is a leuco dye, such a rupture may result in unwanted colour formation.

A poor temperature resistance may limit the temperature wherein materials comprising such capsules may be laminated. A too high lamination temperature may result in a rupture of the capsules and, when the encapsulant is again a leuco dye, result in colour formation.

### Summary of the invention

It is an object of the present invention to provide compositions comprising capsules having an improved solvent and heat resistance and to compositions comprising such capsules.

This object is realised with compositions as defined in claim 1.

It is another object of the invention to provide laser markable compositions comprising such capsules and to provide laser markable articles made therewith.

Disclosed but not claimed is the provision of a method to prepare such capsules.

Further objects of the invention will become apparent from the description hereinafter.

### Detailed description of the invention

### Definitions

The term "monofunctional" in e.g. monofunctional polymerizable compound means that the polymerizable compound includes one polymerizable group.

The term "difunctional" in e.g. difunctional polymerizable compound means that the polymerizable compound includes two polymerizable groups.

The term "polyfunctional" in e.g. polyfunctional polymerizable compound means that the polymerizable compound includes more than two polymerizable groups.

The term "alkyl" means all variants possible for each number of carbon atoms in the alkyl group i.e. methyl, ethyl, for three carbon atoms: n-propyl and isopropyl; for four carbon atoms: n-butyl, isobutyl and tertiary-butyl; for five carbon atoms: n-pentyl, 1,1-dimethyl-propyl, 2,2-dimethylpropyl and 2-methyl-butyl, etc.

Unless otherwise specified a substituted or unsubstituted alkyl group is preferably a C₁ to C₆-alkyl group.

Unless otherwise specified a substituted or unsubstituted alkenyl group is preferably a C₂ to C₆-alkenyl group.

Unless otherwise specified a substituted or unsubstituted alkynyl group is preferably a C₂ to C₆-alkynyl group.

Unless otherwise specified a substituted or unsubstituted aralkyl group is preferably a phenyl or naphthyl group including one, two, three or more C₁ to C₆-alkyl groups.

Unless otherwise specified a substituted or unsubstituted alkaryl group is preferably a C₇ to C₂₀-alkyl group including a phenyl group or naphthyl group.

Unless otherwise specified a substituted or unsubstituted aryl group is preferably a phenyl group or naphthyl group

Unless otherwise specified a substituted or unsubstituted heteroaryl group is preferably a five- or six-membered ring substituted by one, two or three oxygen atoms, nitrogen atoms, sulfur atoms, selenium atoms or combinations thereof.

The term "substituted", in e.g. substituted alkyl group means that the alkyl group may be substituted by other atoms than the atoms normally present in such a group, i.e. carbon and hydrogen. For example, a substituted alkyl group may include a halogen atom or a thiol group. An unsubstituted alkyl group contains only carbon and hydrogen atoms

Unless otherwise specified a substituted alkyl group, a substituted alkenyl group, a substituted alkynyl group, a substituted aralkyl group, a substituted alkaryl group, a substituted aryl and a substituted heteroaryl group are preferably substituted by one or more constituents selected from the group consisting of methyl, ethyl, n-propyl, isopropyl, n-butyl, isobutyl and tertiary-butyl, ester, amide, ether, thioether, ketone, aldehyde, sulfoxide, sulfone, sulfonate ester, sulfonamide, -CI, -Br, -I, -OH, -SH, -CN and -NO₂.

### Capsules

The invention is defined by claims 1 to 10. The capsules according to the invention are also referred to as microcapsules.

The particle size of the capsules is preferably between 50 and 2000 nm, more preferably between 100 and 1000 nm, most preferably between 250 and 750 nm.

Many methods are known to prepare microcapsules, such as described in "Microspheres, microcapsules & liposomes", volume 1; preparation & chemical applications, volume 2; medical & biotechnological applications, edited by Reza Arshady (ISBN 0953218716).

Common methods for making microcapsules include spray-drying, solvent evaporation, mini-emulsion, or interfacial polymerization.

To guarantee the formation of a core-shell material, interfacial polymerization is used to form capsules according to the present invention. With this technique, a capsule shell is formed at the oil/water interface. By growing a polymer around the encapsulant, a higher encapsulation efficiency may be obtained.

An overview of interfacial polymerization techniques is disclosed in Salaon, F. (2013) "Microencapsulation by Interfacial Polymerization", in Encapsulation Nanotechnologies (ed V. Mittal), John Wiley & Sons, Inc., Hoboken, NJ, USA.

In general, interfacial polymerization requires the dispersion of an oleophilic phase in an aqueous continuous phase or vice versa. Each of the phases contains at least one dissolved monomer (a first shell component) that is capable of reacting with another monomer (a second shell component) dissolved in the other phase. Upon polymerization, a polymer is formed that is insoluble in both the aqueous and the oleophilic phase. As a result, the formed polymer has a tendency to precipitate at the interface of the oleophilic and aqueous phase, thereby forming a shell around the dispersed phase, which grows upon further polymerization.

The capsules according to the present invention are preferably prepared from an oleophilic dispersion in an aqueous continuous phase.

A first shell component used to prepare the capsules according to the present invention is a polyisocyanate compound as described below. The second shell component is a compound containing a reactive hydrogen.

The capsules according to the present invention are thus prepared by interfacial polymerization of a polyisocyanate as described below and a compound containing a reactive hydrogen.

The polyisocyanate is preferably added to the oleophilic phase while the compound containing a reactive hydrogen is added to the other phase.

The type of compound containing a reactive hydrogen determines the type of polymer formed at the interphase. Preferred compounds containing a reactive hydrogen are selected from multifunctional amines, hydrazides, alcohols, thiols, water, etc.

Preferred polymeric shells formed by interfacial polymerization are selected from the group consisting of polyurea, prepared from polyisocyanates as a first shell component and polyamines as a second shell component; polyurethanes, prepared from polyisocyanates as a first shell component and polyalcohols, also referred to as polyols, as a second shell component; and polysemicarbazides, prepared from polyisocyanates as a first shell component and polyhydrazides as a second shell component.

The shell can also be composed of combinations of these polymers.

A catalyst may be used to accelerate the interfacial polymerization. Well known catalysts are Sn based catalysts, such as dibutyl tin dilaurate or dioctyl tin laurate, Zn or Bi based catalysts, such as disclosed in EP-A 2824713 (Agfa Gevaert).

### Polyisocyanates

The polyisocyanate used to prepare the capsules according to the present invention comprises at least 1 substituted or unsubstituted arylene or heteroarylene group, as defined by Formula IV. Preferably, the polyisocyanate comprises 1 to 3 substituted or unsubstituted arylene or heteroarylene groups.

The polyisocyanate preferably has a Molecular Weight (Mw) of 1500 or less, more preferably of 1000 or less, most preferably of 750 or less.

In a non-claimed embodiment, the polyisocyanate used to prepare the capsules is preferably a compound having a chemical structure according to Formula I, or a derivative thereof, 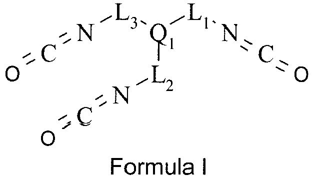 wherein
Q1 represents an organic moiety,
L1, L2 and L3 are linking groups comprising a substituted or unsubstituted arylene or heteroarylene group.

Q₁ preferably represents an organic moiety comprising 1 to 25 atoms, more preferably comprising 1 to 15 atoms.

More preferred, Q1 represents an organic moiety comprising 0 to 8 C atoms, more preferably 1 to 5 C atoms.

In a non-claimed embodiment the polyisocyanate is a compound having a chemical formula according to Formula II, or a derivative thereof, 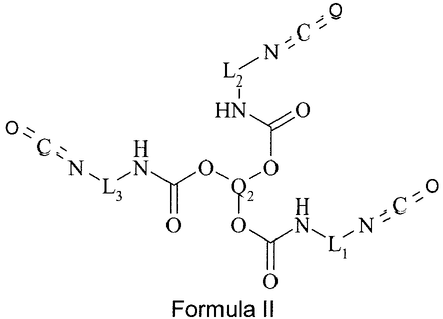 wherein
Q2 represents an organic moiety, preferably comprising 0 to 8 C atoms, more preferably comprising 1 to 5 C atoms.
L1, L2 and L3 have the same meaning as in Formula I.

Preferred compounds according to Formula II are trimethylolpropane - toluene-diisocyanate adducts or trimethylolpropane - xylylenediisocyanate adducts (for example Takenate D110N commercially available from Mitsui).

In a non-claimed embodiment the polyisocyanate is a compound having a chemical structure according to Formula III, or a derivative thereof, 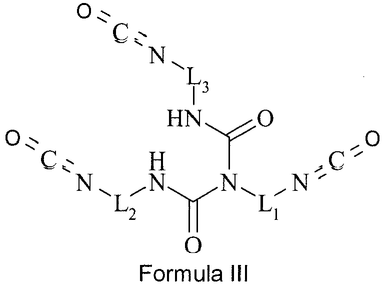 wherein
L1, L2 and L3 have the same meaning as in Formula I.

In a particular preferred embodiment, the organic moiety Q₁ and Q₂ in Formula I and II represents a cyclic group.

According to the invention, the polyisocyanate is a compound having a chemical structure according to Formula IV 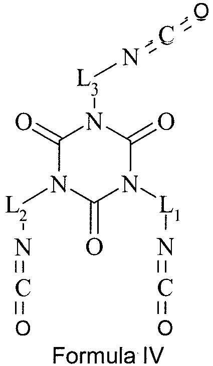 wherein
L1, L2 and L3 have the same meaning as in Formula I.

A derivative referred above may be an oligomer of the compound according to Formula I, II, III or IV. Such an oligomer may be formed for example by reacting an excess amount of the compound according to Formula I, II or III with an amine.

For example, reacting an excess of compound according to Formula I with an amine having a formula H₂N-X-NH₂ results, amongst others, in an oligomer of the compound according to Formula I according to the following Formula,

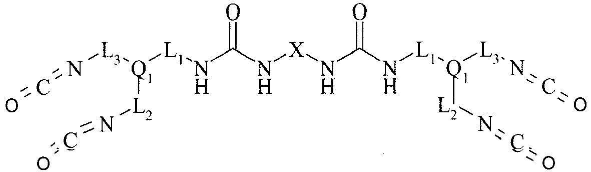

An example of a polyisocyanate according to Formula IV is an isocyanurate derivative of toluene diisocyanate.

A particularly preferred polyisocyanate according to Formula IV is an isocyanurate derivative of xylylenediisocyanate.

The isocyanurate derivative of xylylenediisocyanate is a trimer of xylylenediisocyanate and is produced by subjecting xylylenediisocyanate to an isocyanurate-forming reaction in the presence of an isocyanurate-forming catalyst.

Xylylenediisocyanate includes the structural isomers 1,2-xylylenediisocyanate, 1,3-xylylenediisocyanate and 1,4-xylylenediisocyanate.

These xylylenediisocyanates may be used singly or in combination of two or more.

1,3-xylylenediisocyanate and 1,4-xylylenediisocyanate are preferably used, more preferably 1,3-xylylenediisocyanate is used.

Isocyanurate derivatives of xylylenediisocyanates, and their preparation methods are disclosed in EP-A 3115386 (Mitsui Chemicals), paragraphs [0015] - [0090] and EP-A 3115430 (Mitsui Chemicals), paragraphs [0019]-[0044]).

In another non-claimed embodiment of a polyisocyanate according to Formula I or II wherein the organic moiety represents a cyclic group has a chemical structure according to Formula V, 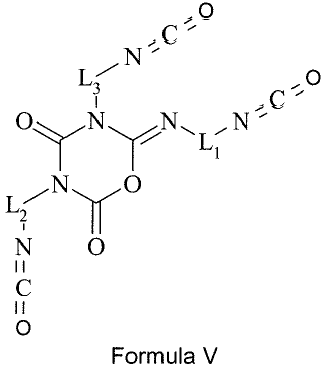 wherein
L1, L2 and L3 have the same meaning as in Formula I.

The arylene group referred to is preferably a phenylene group.

Examples of polyisocyanate compounds are shown in Table 1.

**Table 1**

| | |
|---|---|
| 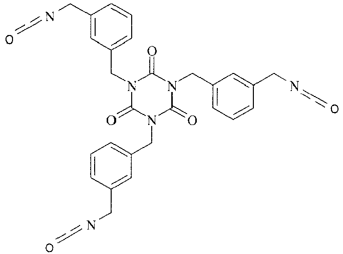 | Polyiso-01 |
| 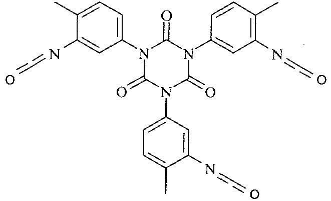 | Polyiso-02 |
| 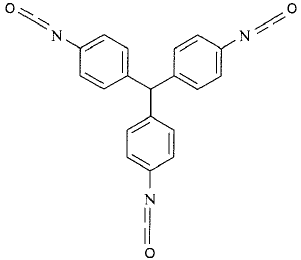 | Polyiso-03 |
| 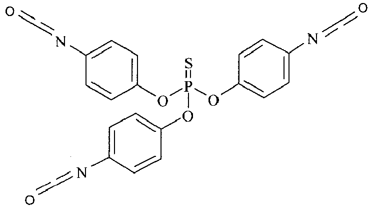 | Polyiso-04 |
| 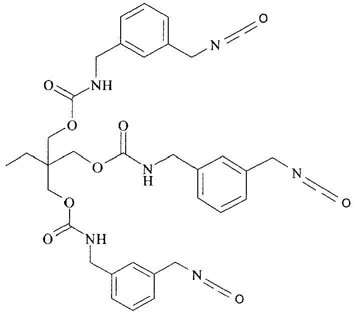 | Polyiso-05 |
| 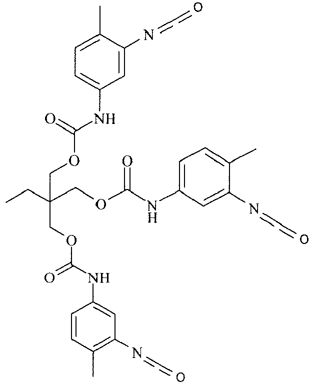 | Polyiso-05 |
| 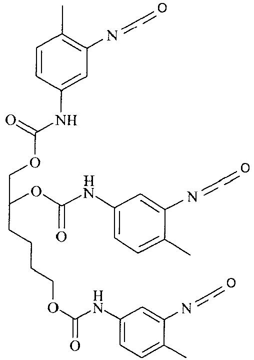 | Polyiso-06 |
| 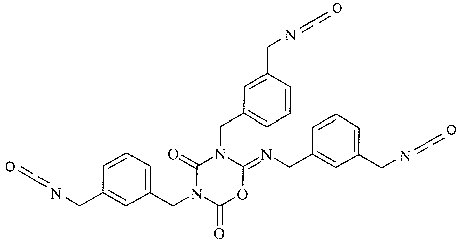 | Polyiso-07 |
| 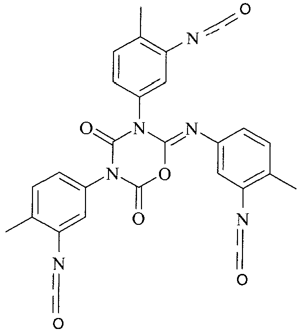 | Polyiso-08 |
| 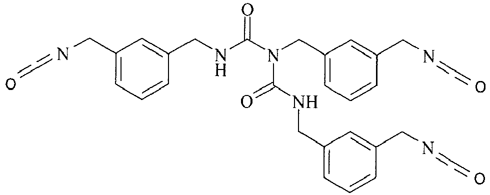 | Polyiso-09 |
| 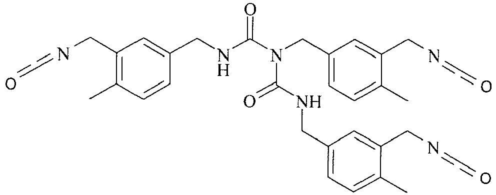 | Polyiso-10 |
| 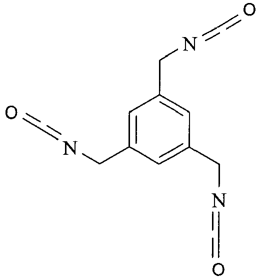 | Polyiso-11 |

### Polyamines

A polyurea shell is the result of an interfacial polymerization between the polyisocyanate compound and a polyamine.

The polyamine may be selected from a diamine, a triamine, a tetraamine, a pentamine, or a hexamine.

Examples of polyamines that may be used are 1,2-diamino-propane, 1,3-diamino-propane, 1,2-diaminoethane, 1,4-diaminobutane, diphenylethylene diamine, diaminocylcohexane, diethylenetriamine, phenylenediamine, benzidine, 2,5-diaminotoluene, o-phenylene diamine, m-phenylene diamine, p-phenylene diamine, bis(6-aminohexyl)amine, Jeffamines® D, ED and T series (polyetheramines from Huntsman), melamine, triethylenetetramine, tetraethylenepentamine, pentaethylenehexamine, hexamethylenediamine, piperazine or a derivative thereof, 2,2'-(ethylene-dioxy)bis(ethylamine), guanidine salts and guanidine, tris-(2-aminoethyl)amine, N, N'-bis(3-aminopropyl)-ethylenediamine and N, N, N', N'-tetrakis(3-aminopropyl)-1, 4-butanediamine.

A particularly preferred polyamine is tetraethylenepentamine.

The amount of polyamine used is typically adjusted so that, for each mole of an isocyanate group, there are 0.5 to 3 moles, more preferably 1 to 3, most preferably 1 to 2 moles of amine groups.

In addition to the polyamines described above, monoamines may be used in the interfacial polymerization.

### Polyols

A polyurethane shell is the result of an interfacial polymerization between the polyisocyanate compound and a polyol.

The polyols may be selected from propylene glycol, glycerol, trimethylolpropane, triethanolamine, ethyleneglycol, diethyleneglycol, triethyleneglycol, tetraethylene-glycol, dipropyleneglycol, 1,3-propanediol, 1,3-butanediol, 1,4-butanediol, 1,6-hexanediol, ethanolamine, pentaerythritol, sorbitol and polyvinylalcohol.

In addition to the polyols described above, monoalcohols may be used in the interfacial polymerization.

### Polyhydrazides

A polysemicarbazide shell is the result of an interfacial polymerization between the polyisocyanate compound and a polyhydrazide.

The polyhydrazide compound preferably has a chemical structure according to Formula I, 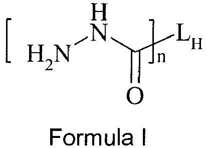 wherein
L_{H} is absent or is a linking group, and
n is an integer ranging from 2 to 4.

L_{H} is preferably selected from the group consisting of a substituted or unsubstituted alkylene group, a substituted or unsubstituted (hetero)cycloalkylene group, a substituted or unsubstituted (hetero)arylene group, a substituted or unsubstituted alkyleneoxide group, a substituted or unsubstituted (hetero)cyclic alkyleneoxide group, and a substituted or unsubstituted aralkylene group.

According to a particular preferred embodiment, L_{H} is a substituted or unsubstituted arylene group, more preferably a substituted or unsubstituted phenylene group.

A particularly preferred polyhydrazide is a dihydrazide (n = 2).

Dihydrazides are typically prepared by reacting a dicarboxylic acid with hydrazine, as shown below. 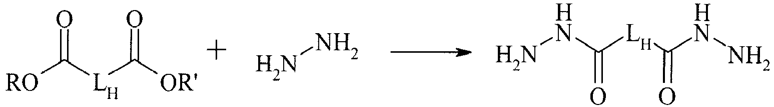 wherein
R and R' are independently selected from the group consisting of a substituted or unsubstituted alkyl group and a substituted or unsubstituted aryl group.
R and R' may be the same.

Preferably, R and R' are independently selected from the group consisting of a methyl group, an ethyl group and a propyl group.

Examples of polyhydrazides are shown in Table 2.

**Table 2**

| | |
|---|---|
| 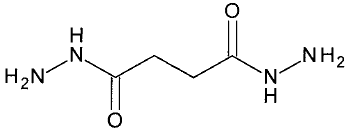 | HYDRAZ-01 |
| 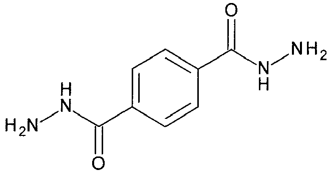 | HYDRAZ-02 |
| 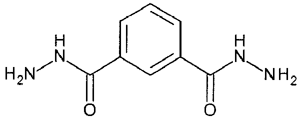 | HYDRAZ-03 |
| 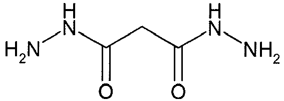 | HYDRAZ-04 |
| 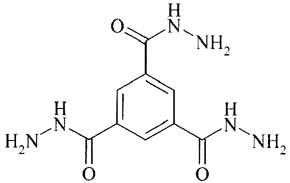 | HYDRAZ-05 |
| 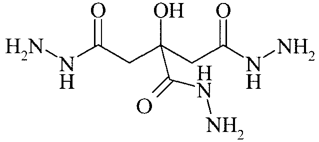 | HYDRAZ-06 |
| 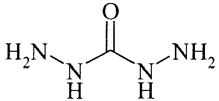 | HYDRAZ-07 |
| 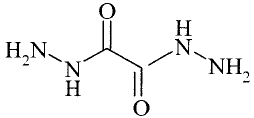 | HYDRAZ-08 |

### Preparation of the capsules

In general, interfacial polymerization requires the dispersion of an oleophilic phase in an aqueous continuous phase or vice versa. Each of the phases contains at least one dissolved monomer (a first shell component), for example the polyisocyanate, that is capable of reacting with another monomer (a second shell component), for example the polyamine, polyol or polyhydrazide, dissolved in the other phase. Upon polymerization, a polymer is formed that is insoluble in both the aqueous and the oleophilic phase. As a result, the formed polymer has a tendency to precipitate at the interface of the oleophilic and aqueous phase, thereby forming a shell around the dispersed phase, which grows upon further polymerization.

The capsule composition according to the present invention is preferably prepared from an oleophilic dispersion in an aqueous continuous phase.

In a preferred embodiment, a water immiscible solvent is used in the dispersion step, which is removed by solvent stripping before or after the shell formation. In a particularly preferred embodiment, the water immiscible solvent has a boiling point below 100°C at normal pressure. Esters are particularly preferred as water immiscible solvent. A preferred organic solvent is ethyl acetate, because it also has a low flammability hazard compared to other organic solvents.

A water immiscible solvent is an organic solvent having low miscibility in water. Low miscibility is defined as any water solvent combination forming a two phase system at 20°C when mixed in a one over one volume ratio.

A preferred method for preparing a dispersion of capsules according to the present invention includes the following steps:
a) preparing a non-aqueous solution of a polyisocyanate described above and optionally a water immiscible organic solvent having a lower boiling point than water;
b) dispersing the non-aqueous solution under high shear in an aqueous solution;
c) optionally stripping the water immiscible organic solvent from the mixture of the aqueous solution and the non-aqueous solution;
d) adding a compound having an active hydrogen described above to the aqueous solution, and
e) preparing the polymeric shell by interfacial polymerization of the polyisocyanate and the compound having an active hydrogen.

The compound having an active hydrogen may already be added to the aqueous solution used in step b).

Preferably, the amount of the compound having an active hydrogen and of the polyisocyanate results in a ratio of active hydrogen to isocyanate groups of 1 to 1.

The encapsulant is preferably added in step a) to the non-aqueous solution.

For preparing a laser markable composition, a leuco dye is added in step (a) to the non-aqueous solution resulting in capsules wherein the leuco dye is located in the core of the capsule.

The polymerization in step e) is preferably carried out at elevated temperatures, preferably at temperature above 50°C, more preferably at a temperature above 75°C, most preferably at a temperature above 85°C, particular preferred at a temperature above 90°C.

It has been observed that at higher temperatures capsules are obtained having an improved solvent resistance and mechanical strength.

The aqueous solution preferably comprises a watersoluble polymer as a protective colloid. The water-soluble polymer may act as a dispersing medium for achieving a homogeneous dispersion easily and for stabilizing the emulsified solution.

The water-soluble polymer may be selected from known anionic polymers, nonionic polymers and amphoteric polymers.

The water-soluble polymer has a solubility in water of preferably 5% or more at a temperature at which the emulsification is carried out.

Specific examples of the water-soluble polymer include polyvinyl alcohol and modified products thereof; polyacrylic amide and derivatives thereof; ethylenevinyl acetate copolymer; styrene-maleic anhydride copolymer; ethylene-maleic anhydride copolymer; isobutylene-maleic anhydride copolymer; polyvinyl pyrrolidone; ethylene- acrylic acid copolymer; vinyl acetate-acrylic acid copolymer; cellulose derivatives such as carboxymethylcellulose and methylcellulose; casein; gelatin; starch derivatives; gum arabic; and sodium alginate.

Among these polymers, polyvinyl alcohol and its derivatives are preferred.

A surfactant may be added to at least one of the non-aqueous and the aqueous phase to achieve more homogenous and stable dispersions. The surfactant is preferably added to the aqueous phase.

A preferred surfactant added to the aqueous phase is a surfactant, which does not cause precipitation or aggregation caused by a reaction with the protective colloid described above and are therefore selected from anionic and nonionic surfactants.

Preferred surfactants include sodium alkylbenzenesulfonate, sodium alkylsulfate, sodium dioctyl sulfosuccinate, polyalkylene glycol (such as polyoxyethylene nonyl phenyl ether), acetylene glycol and the like.

When the non-aqueous phase is prepared, it might be advantageous to use an organic solvent having a boiling point of from 100 to 300 °C as a hydrophobic organic solvent in which the encapsulant may be dissolved.

Specific examples thereof include esters, dimethylnaphthalene, diethyl-naphthalene, diisopropylnaphthalene, dimethylbiphenyl, diisopropylbiphenyl, diisobutylbiphenyl, 1-methyl-1-dimethylphenyl-2-phenylmethane, 1-ethyl-1-dimethylphenyl-1-phenylmethane, 1-propyl-1-dimethylphenyl-1-phenylmethane, triallylmethane (such as tritoluylmethane and toluyildiphenyimethane), terphenyl compounds, alkyl compounds, alkylated diphenyl ether compounds (such as propyldiphenyl ether), hydrogenated terphenyl compounds (such as hexahydroterphenyi), and diphenyl ether.

Among these examples, esters are particularly preferable from the viewpoints of the emulsification stability of the emulsion.

Examples of the esters include phosphate esters such as triphenyl phosphate, tricresyl phosphate, butyl phosphate, octyl phosphate and cresylphenyl phosphate; phthalic esters such as dibutyl phthalate, 2-ethylhexyl phthalate, ethyl phthalate, octyl phthalate, and butylbenzyl phthalate; dioctyl tetrahydrophthalate; benzoic esters such as ethyl benzoate, propyl benzoate, butyl benzoate, isopentyl benzoate, and benzyl benzoate; abietic esters such as ethyl abietate, and benzyl abietate; dioctyl adipate; isodecyl succinate; diocyl azelate; oxalic esters such as dibutyl oxalate and dipentyl oxalate; diethyl malonate; maleic esters such as dimethyl maleate, diethyl maleate, and dibutyl maleate; tributyl citrate; sorbic esters such as methyl sorbate, ethyl sorbate and butyl sorbate; sebacic esters such as dibutyl sebacate, and dioctyl sebacate; ethylene glycol esters such as formic monoester and diester, butyric monoester and diester, lauric monoester and diester, palmitic monoester and diester, stearic monoester and diester, and oleic monoester and diester; triacetin; diethyl carbonate; diphenyl carbonate; ethylene carbonate; propylene carbonate; boric esters such as tributyl borate and tripentyl borate.

Among them, it is preferable to use tricresyl phosphate alone or in combination with other solvent(s).

Self-dispersible capsules wherein a dispersing group is covalently bound the polymeric shell, as described WO2015/158649 (Agfa Graphics), paragraphs [0037] to [0057], and wherein the shell is prepared with a polyisocyanate as described above, may also be used in the present invention.

### Encapsulant

In principle any compound may be encapsulated.

For example, the encapsulant may be a blocked isocyanate as disclosed in WO2015/158649 (Agfa Graphics), paragraphs [0060] to [0066].

When used for laser markable composition, the encapsulant is preferably a leuco dye.

An optothermal converting agent used in a laser markable composition may also be encapsulated, together with the leuco dye in the same capsules or in separate capules.

An encapsulated optothermal converting agent may be used in any application, for example to improve the stability of the optothemal converting agent in that application.

The capsules may also be used in perfuming compositions, for example encapsulating volatile compounds like perfumes, wherein the volatile compound is released in a controlled manner, as disclosed in for example WO2013/068255 (FIRMENICH).

### Laser markable composition

The laser markable composition preferably comprises a leuco dye encapsulated in capsules as described above.

Preferred laser markable compositions further comprise an optothermal converting agent and a developing agent. The composition may further comprise other ingredients such as an acid scavenger and a UV absorber.

The laser markable composition may also comprise a dye or pigment that enhances the contrast between the laser marked image and the background colour.

In a particular preferred embodiment, the laser markable composition comprises a white pigment.

### Leuco dye

A leuco dye is a substantially colourless compound, which may form a coloured dye upon an inter- or intra-molecular reaction. The inter- or intra-molecular reaction may be triggered by heat, preferably heat formed during exposure with an IR laser.

Examples of leuco dyes are disclosed in WO2015/165854 (Agfa Gevaert), paragraph [069] to [093].

### Optothermal converting agent

An optothermal converting agent generates heat upon absorption of radiation.

The optothermal converting agent preferably generates heat upon absorption of infrared radiation, more preferably near infrared radiation. Near infrared radiation has a wavelength between 750 and 2500 nm.

Optothermal converting agents may be an infrared absorbing dye, an infrared absorbing pigment, or a combination thereof.

The optothermal converting agent is preferably an infrared absorbing dye.

The optothermal converting agent may be added to the laser markable composition comprising the encapsulated leuco dye or the opthermal converting agent may be encapsulated together with the leuco dye.

### Infrared radiation absorbing (IR) pigment

Suitable examples of infrared absorbing pigments include but are not limited to carbon black such as acetylene black, channel black, furnace black, lamp black, and thermal black; oxides, hydroxides, sulfides, sulfates and phosphates of metals such as copper, bismuth, iron, nickel, tin, zinc, manganese, zirconium, tungsten, lanthanum, and antimony including lanthane hexaboride, indium tin oxide (ITO) and antimony tin oxide, titanium black and black iron oxide.

A preferred infrared absorbing pigment is carbon black.

The particle size of the pigment is preferably from 0.01 to 5 µm, more preferably from 0.05 to 1µm.

The amount of the infrared absorbing pigment is between 10 and 1000 ppm, preferably between 25 and 750 ppm, more preferably between 50 and 500 ppm, most preferably between 100 and 250 ppm, all relative to the total dry weight of a laser markable layer. An amount of infrared absorbing pigment above 1000 ppm results in a too high background density of the laser markable article.

Aqueous dispersions of carbon black are preferably used in the present invention. Examples of such aqueous carbon black dispersions are CAB-O-JET® 200 and 300 from CABOT.

The IR dyes disclosed below may also be used as IR pigments, for example cyanine pigment, merocyanine pigment, etc.

Other suitable Infrared radiation absorbing pigments are disclosed in WO2005/068207, WO2007/141522, WO2009/059900, and WO2015/015200.

### Infrared radiation absorbing (IR) dye

Infrared absorbing dyes are preferred for their narrow absorption spectra, compared to pigments, enabling multicolour images to be formed.

In principle any IR dye may be used, for example the IR dyes disclosed in "Near-Infrared Dyes for High Technology Applications" (ISBN 978-0-7923-5101-6).

An advantage of using IR dyes is that the absorption spectrum of an IR dye tends to be narrower than that of an IR pigment. This allows the production of a multicoloured image when a plurality of laser markable layers, each laser markable layer containing different IR dyes and leuco dyes, are used. The IR dyes having a different maximum absorption wavelength can then be adressed by IR lasers with corresponding emission wavelengths causing colour formation only in the laser markable layer of the adressed IR dye. Such multicolour articles have been disclosed in for example US 4720449 (Polaroid), EP-A 2719540 (Agfa Gevaert) and EP-A 2719541 (Agfa Gevaert).

Preferred IR dyes are polymethine dyes due to their low absorption in the visible region and their selectivity, i.e. narrow absorption peak in the infrared region. Particular preferred polymethine IR dyes are cyanine IR dyes.

Preferred IR having an absorption maximum of more than 1100 nm are those disclosed in EP-A 2722367, paragraphs [0044] to [0083] and WO2015/165854, paragraphs [0040] to [0051].

IR dyes having an absorption maximum between 1000 nm and 1100 nm are preferably selected from the group consisting of quinoline dyes, indolenine dyes, especially a benzo[cd]indoline dye. A particularly preferred IR dye is 5-[2,5-bis[2-[1-(1-methylbutyl)-benz[cd]indol-2(1H)-ylidene]ethylidene]-cyclopentylidene]-1-butyl-3-(2-methoxy-1-methylethyl)-2,4,6(1H,3H,5H)-pyrimidinetrione (CASRN 223717-84-8) represented by the Formula IR-1, or the IR dye represented by Formula IR-2:

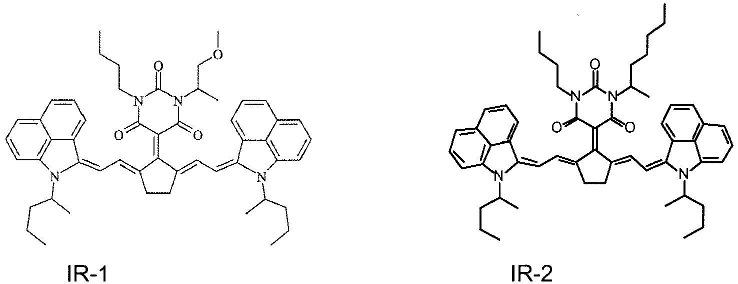

Both IR dyes IR-1 and IR-2 have an absorption maximum λₘₐₓ around 1052 nm making them very suitable for a Nd-YAG laser having an emission wavelength of 1064 nm.

The amount of IR dye in a dried laser markable layer is preferably between 0.01 and 1, more preferably between 0.025 and 0.5 wt % relative to the total dry weight of a laser markable layer. Enough IR dye has to be present to ensure sufficient colour density formation upon exposure to IR radiation. However, using too much IR dye may result in unwanted background colouration of the laser markable materials.

A combination of two, three or more IR dyes may be used in the laser markable layer. Such a combination of IR dyes may be used to optimize the absorption spectrum of the laser markable layer. Also, a mixture of IR dyes may improve the solubility of the IR dyes in the laser markable composition wherewith the laser markable layer is prepared.

### Developing agent

A developing agent is capable of reacting with a colourless leuco dye resulting in the formation of a coloured dye.

The developing agent is preferably a water soluble or water dispersible developing agent.

Various electron accepting substances may be used as developing agent in the present invention. Examples thereof include phenolic compounds, organic or inorganic acidic compounds and esters or salts thereof.

Examples of developing agents that may be used are disclosed in WO2014/124052 (FujiFilm Hunt Chemicals), paragraph [0069] to [0073].

Preferred developing agents are metal salts of a carboxylic acid, as dislosed in WO2006/067073 (Datalase), page 3, line 4 to page 5, line 31.

A preferred colour developing agent is a metal salt of salicylic acid, for example zinc salicylate. A particularly preferred colour developing agent is zinc 3,5-bis(α-methylbenzyl) salicylate.

A developing agent precursor, i.e. a compound, which is capable of releasing a developing agent upon exposure to heat or IR radiation, may also be used. An advantage of such a developing agent precursor may be a better stability towards the environment.

Preferred developing agent precursors are disclosed in WO2016/184881, paragraph [086] to [0123].

### UV absorbers

The laser markable composition may also comprise a UV-absorber. The UV-absorber is however preferably present in a protective layer, provided on top of the printed laser markable image.

Examples of suitable UV-absorbers include 2-hydroxyphenyl-benzophenones (BP) such as Chimassorb™ 81 and Chimassorb™ 90 from BASF; 2-(2-hydroxyphenyl)-benzotriazoles (BTZ) such as Tinuvin™ 109, Tinuvin™ 1130, Tinuvin™ 171, Tinuvin™ 326, Tinuvin™ 328, Tinuvin™ 384-2, Tinuvin™ 99-2, Tinuvin™ 900, Tinuvin™ 928, Tinuvin™ Carboprotect™, Tinuvin™ 360, Tinuvin™ 1130, Tinuvin™ 327, Tinuvin™ 350, Tinuvin™ 234 from BASF, Mixxim™ BB/100 from FAIRMOUNT, Chiguard 5530 from Chitec; 2-hydroxy-phenyl-s-triazines (HPT) such as Tinuvin™ 460, Tinuvin™ 400, Tinuvin™ 405, Tinuvin™ 477, Tinuvin™ 479, Tinuvin™ 1577 ED, Tinuvin™ 1600 from BASF, 2-(2,4-dihydroxyphenyl)-4,6-bis-(2,4-dimethylphenyl)-s-triazine (CASRN1668-53-7) from Capot Chemical Ltd and 4-[4,6-bis(2-methyl-phenoxy)-1,3,5-triazin-2-yl]-1,3-benzenediol (CASRN13413-61-1); titanium dioxide such as Solasorb 100F from from Croda Chemicals; zink oxide such as Solasorb 200F from Croda Chemicals; benzoxazines such as Cyasorb UV-3638 F, CYASORB™ UV-1164 from CYTEC; and oxamides such as Sanduvor VSU from Clariant.

Preferred UV absorbers have in the wavelength region between 300 and 400 nm a maximum absorption above 330 nm, more preferably above 350 nm.

Particular preferred UV absorbers are hydroxyphenyl benzotriazoles and 2-hydroxyphenyl-s-triazines having a maximum absorption above 350 nm in the wavelength region 300 - 400 nm.

### Acid Scavenger

The laser markable composition may contain one or more acid scavengers.

Acid scavengers include organic or inorganic bases. Examples of the inorganic bases include hydroxides of alkali metals or alkaline earth metals; secondary or tertiary phosphates, borates, carbonates; quinolinates and metaborates of alkali metals or alkaline earth metals; a combination of zinc hydroxide or zinc oxide and a chelating agent (e.g., sodium picolinate); hydrotalcite such as Hycite 713 from Clariant; ammonium hydroxide; hydroxides of quaternary alkylammoniums; and hydroxides of other metals. Examples of the organic bases include aliphatic amines (e.g., trialkylamines, hydroxylamines and aliphatic polyamines); aromatic amines (e.g., N-alkyl-substituted aromatic amines, N-hydroxylalkyl-substituted aromatic amines and bis[p-(dialkylamino)phenyl]-methanes), heterocyclic amines, amidines, cyclic amidines, guanidines and cyclic guanidines.

Other preferred acid scavangers are HALS compounds. Example of suitable HALS include Tinuvin™ 292, Tinuvin™ 123, Tinuvin™ 1198, Tinuvin™ 1198 L, Tinuvin™ 144, Tinuvin™ 152, Tinuvin™ 292, Tinuvin™ 292 HP, Tinuvin™ 5100, Tinuvin™ 622 SF, Tinuvin™ 770 DF, Chimassorb™ 2020 FDL, Chimassorb™ 944 LD from BASF; Hostavin 3051, Hostavin 3050, Hostavin N 30, Hostavin N321, Hostavin N 845 PP, Hostavin PR 31 from Clariant.

Further examples of acid scavengers are salts of weak organic acids such as carboxylates (e.g. calcium stearate).

A preferred acid scavenger is an organic base, more preferably an amine. A particular preferred acid scavenger is an organic base having a pKb of less than 7.

### Laser markable Article

The invention includes a method of preparing a laser markable article including the step of providing a composition according to claim 5 or 6 on a support.

The laser markable composition may be provided onto a support by co-extrusion or any conventional coating technique, such as dip coating, knife coating, extrusion coating, spin coating, spray coating, slide hopper coating and curtain coating.

The invention includes a method of preparing a laser markable article according to claim 7, wherein the composition is provided on a support by intaglio printing, screen printing, flexographic printing, offset printing, inkjet printing, or rotogravure printing. Using a printing method is preferred when only a part or several parts of a support has to be provided with a laser markable layer.

The invention includes a method of preparing a laser markable article according to claim 7 or 8, wherein the article is selected from the group consisting of a packaging, a foil, a laminate, a security document, a label, a decorative object and an RFID tag.

### Support

The laser markable composition may be applied on any type of surface, for example a metallic support, a glass support, a polymeric support, or a paper support. The laser markable composition may also be applied on a textile surface.

The support may be provided with a primer to improve the adhesion between the support and the laser markable composition.

A primer containing a dye or a pigment, for example a white primer, may also be provided on the support, for example to improve the contrast of the laser marked image.

The support may be a paper support, such as plain paper or resin coated paper, e.g. polyethylene or polypropylene coated paper.

There is no real limitation on the type of paper and it includes newsprint paper, magazine paper, office paper, or wallpaper but also paper of higher grammage, usually referred to as paper boards, such as white lined chipboard, corrugated (fiber) board and packaging board.

Also, so-called synthetic papers, such as the Synaps™ synthetic papers from Agfa Gevaert, which are opaque polyethylene terephthalate sheets, may be used as support.

Suitable polymeric supports include cellulose acetate propionate or cellulose acetate butyrate, polyesters such as polyethylene terephthalate and polyethylene naphthalate, polyamides, polycarbonates, polyimides, polyolefins, polyvinylchlorides, polyvinylacetals, polyethers, polysulfonamides, polylactide (PLA) and polyimide.

A preferred polymeric support is a biaxially stretched polyethylene terephthalate foil (PET-C foil) due to its very high durability and resistance to scratches and chemical substances.

The manufacturing of PET-C foils and supports is well-known in the art of preparing suitable supports for silver halide photographic films. For example, GB 811066 (ICI) teaches a process to produce biaxially oriented polyethylene terephthalate foils and supports.

The polymeric support may be a single component extrudate or co-extrudate. Examples of suitable co-extrudates are PET/PETG and PET/PC.

There is no restriction on the shape of the support. It can be a flat sheet, such as a paper sheet or a polymeric film or it can be a three dimensional object like e.g. a plastic coffee cup.

The three dimensional object can also be a container like a bottle or a jerry-can for including e.g. oil, shampoo, insecticides, pesticides, solvents, paint thinner or other type of liquids.

The laser markable composition may also be applied on a so-called shrink foil. Such a foil shrinks tightly over whatever it is covering when heat is applied.

The most commonly used shrink foils are polyolefin foils, i.e. polyethylene or polypropylene foils. However, other shrink foils include PCV foils.

### Packaging

A preferred laser markable article is packaging.

Laser marking is typically used to add variable data, for example batch numbers, expiry dates, addressees, etc. on the packaging.

Preferably laser marking is carried out in-line in the packaging process.

The laser marked "image" on a packaging may comprises data, images, barcodes, QR codes, or a combination thereof.

An advantage of using laser marking in a packaging process is the ability to mark information through a wrapping foil, for example the flavour-protective foil used for cigarette packs. In such a way, variable data may be provided on the cigarette packs after the protective foil has already been provided.

Another preferred laser markable packaging is used for pharmaceutical packaging. For pharmaceutical packaging, track and trace requirements become more and more demanding to comply with the ever evolving legislation.

Another advantage of using laser marking instead of another printing technique, such as inkjet printing, is the absence of any chemicals in the marking process. Especially for pharmaceutical and food packaging, the absence of chemicals in the packaging line is a great advantage.

By selecting a proper leuco dye, or a mixture of leuco dyes, the package may be provided with data or images in any colour.

A preferred packaging is folded cardboard or corrugated cardboard laminated with paper. Such packaging is preferably used for cosmetics, pharmaceuticals, food or electronics.

Multiple colour, even full colour, images may be obtained when the packaging is provided with multiple laser markable compositions, each containing a different leuco dye and optothermal converting agent, as disclosed in EP-A2719540 (Agfa Gevaert) and EP-A 2719541 (Agfa Gevaert).

### Security Documents

The laser markable compositions may also be used to prepare security documents, such as for example ID cards.

Typically, laser markable security documents are prepared by laminating a laser markable foil or laminate, optionally together with other foils or laminates, onto one or both sides of a core support.

Such laser markable security documents and their preparation have been disclosed in for example WO2015/091782 (Agfa Gevaert).

The laser markable laminate may be prepared by providing a laser markable composition according to the present invention on a support. The support is described above and is preferably a transparent polymeric support.

The laser markable laminate may comprise more than one laser markable layers or may comprise additional layers such an ink receiving layer, a UV absorbing layer, intermediate layers or adhesion promoting layers.

The laser markable laminate is typically laminated on one or both sides of a core support using elevated temperatures and pressures.

Preferred core supports are disclosed in WO2014/057018 (Agfa Gevaert), paragraphs [0112] to [0015].

The lamination temperature depends on the type of core support used. For a polyester core, lamination temperatures are preferably between 120 and 140°C, while they are preferably above 150°C - 160°C for a polycarbonate core.

The capsules of the laser markable layer have to withstand the elevated temperatures and pressures to avoid colour formation as a result of the lamination step, resulting in a too high background colour.

### Lasermarking

Laser marking is carried out with an infrared laser.

The infrared laser may be a continuous wave or a pulsed laser.

For example a CO₂ laser, a continuous wave, high power infrared laser having emission wavelength of typically 10600 nm (10.6 micrometer) may be used.

CO₂ lasers are widely available and cheap. A disadvantage however of such a CO₂ laser is the rather long emission wavelength, limiting the resolution of the laser marked information.

To produce high resolution laser marked data, it is preferred to use a near infrared (NIR) laser having an emission wavelength between 750 and 2500, preferably between 800 and 1500 nm in the laser marking step.

A particularly preferred NIR laser is an optical pumped semiconductor laser. Optically pumped semiconductor lasers have the advantage of unique wavelength flexibility, different from any other solid-state based laser. The output wavelength can be set anywhere between about 920 nm and about 1150 nm. This allows a perfect match between the laser emission wavelength and the absorption maximum of an optothermal converting agent present in the laser markable layer.

A preferred pulsed laser is a solid state Q-switched laser. Q-switching is a technique by which a laser can be made to produce a pulsed output beam. The technique allows the production of light pulses with extremely high peak power, much higher than would be produced by the same laser if it were operating in a continuous wave (constant output) mode, Q-switching leads to much lower pulse repetition rates, much higher pulse energies, and much longer pulse durations.

Laser marking may also be carried out using a so-called Spatial Light Modulator (SLM) as disclosed in WO2012/044400 (Vardex Laser Solutions).

### EXAMPLES

### Materials

All materials used in the following examples were readily available from standard sources such as ALDRICH CHEMICAL Co. (Belgium) and ACROS (Belgium) unless otherwise specified. The water used was deionized water.

**Polyiso-01** is a xylylene diisocyanate (XDI) isocyanurate with a structure as shown below and synthesized as described in EP-A 3115386 and EP-A3115430.

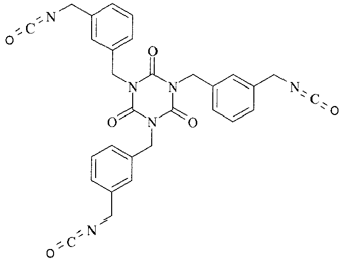

**Polyiso-05** is an XDI - trimethylolpropane (TMP) adduct with a structure as shown below and commercially available as Takenate D110N from MITSUI.

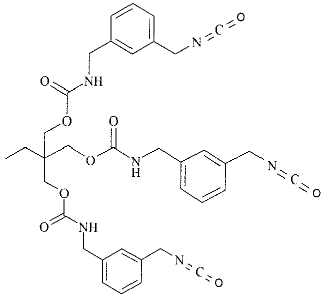

**Polyiso-C01** is a Hydrogenated XDI - TMP adduct with a structure as shown below and commercially available as Takenate D140 N from MITSUI.

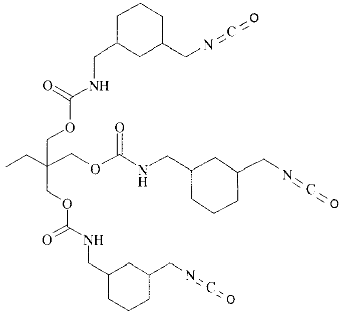

**Polyiso-C02** is an Isophorone Diisocyanate (IPDI) - TMP adduct with a structure as shown below and commercially available as Takenate D120N from MITSUI.

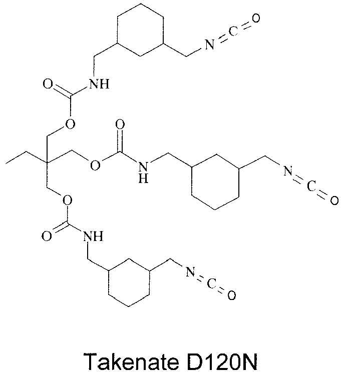

**Mowiol 4 88** is a polyvinyl alcohol commercially available from Hoechst.

**Olfine E1010** is a wetting agent commercially available from Shin-Etsu Chemical Company.

**Arlo** is a 15 wt% aqueous solution of Marlon A365, commercially available from Brenntag.

**Proxel Ultra 5** is a biocide commercially available from Avecia.

**Ralox 46** is a sterically hindered phenolix antioxidant from Raschig.

**Tinuvin 928** is an UV absorber commercially available from BASF.

**DISFLAMOLL TKP** is a low volatility halogen free phosphate plasticizer from Lanxess.

**4,4'-Thiobis(6-tert-butyl-m-cresol)** is commercially available from TCI Europe.

**Zinc 3,5-bis(alpha methylbenzyl) salicylate** (CASRN53770-52-8) is a developing agent, commercially available from Sanko Europe).

**MOW** is an aqueous solution of 15 wt% Mowiol 4 88 and 2 wt% Proxel Ultra 5.

**MEK** is an abbreviation used for methylethylketone.

**1064IR** is an infrared dye with the following structure: 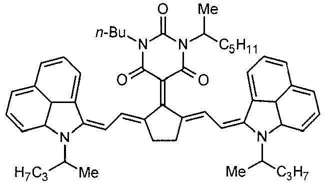 1064IR can be prepared according to the synthetic methods reported in EP-A 2463109 (Agfa), paragraphs [0150] to [0159].

**MEK** is an abbreviation used for methylethylketone.

**WINCON 205** is a black leuco dye commercially available from Connect Chemicals.

**PERGASCRIPT Black IR** is a black leuco dye commercially available from BASF.

**PERGASCRIPT Black 2C** is a black leuco dye commercially available from BASF.

**Orange DCF** is an orange leuco dye commercially available from Connect Chemicals.

**MITSUI GN-169** is a cyan leuco dye commercially available from Mitsui.

**MITSUI GN-2** is a cyan leuco dye commercially available from Mitsui.

**TINUVIN 928** is a UV absorber commercially available from BASF.

**PET-C** is a biaxially stretched polyethylene terephthalate foil prepared as follows:
A 1100 µm thick polyethylene terephthalate sheet was first longitudinally stretched and then coated on one side with the coating composition SUB-1 (see Table 3) at a wet coating thickness of 10 µm. After drying, the longitudinally stretched and coated polyethylene terephthalate sheet was transversally stretched to produce a single side subbed 63 µm thick sheet PET-C.

**Table 3**

| **W% of components** | **SUB-1** |
|---|---|
| Deionized water | 69.44 |
| CCE | 15.40 |
| Resorcinol | 12.55 |
| PAR-sol | 0.57 |
| PEA-sol | 0.68 |
| DOW-sol | 0.68 |
| Surfynsol | 0.68 |

### Preparations of encapsulated leuco dye dispersions

### LD DISP 1

LD DISP 1a was dispersion as follows: 2.1 g Tinuvin 928, 5.47 g WINCON 205, 1.22 g Pergascript black IR, 3.04 g Pergascript Black 2C, 4.87 g Orange DCF, 4.87 g MITSUI GN-169 and 2.43 g MITSUI GN-2 were added to 32 g ethyl acetate. 23.1 g TAKENATE D140N was added to the mixture. The mixture was heated to the boiling point and stirred until all components were dissolved. The mixture was brought to 25 °C. 0.25 g 1064IR dissolved in 2 mL methylene chloride was added to the mixture. In a separate flask, 0.04 g of OLFINE E1010 was added to 127 g of a 7.3 wt% MOWIOL 4 88 solution. The ethyl acetate-based solution was added to the aqueous solution. The mixture was cooled in an ice bath and emulsified using a T25 digital Ultra-Turrax® with an 18N rotor commercially available from IKA at 15000 rpm during 5 minutes. Ethyl acetate was removed under reduced pressure. During the process, also 10 mL of water was evaporated and therefore, the same amount of water was added to the mixture after evaporation. 2.13 g tetraethylenepentamine (CAS 112-57-2) was added to the reaction mixture. The mixture was then stirred for 16 hours at 65 °C and afterwards cooled to 25 °C. Large particles were removed by filtering the mixture using a cloth filter with 60 µm pores.

### LD DISP 2 to 4

LD DISP 2 - 4 have been prepared as LD DISP 1 by replacing Takenate 140 N with respectively Takenate 120N, Takenate 110N and Takenate 131N.

### LD DISP 5 to 8

LD DISP 5 to 8 have been prepared as respectively LD DISP 1 to 4. However, after the addition of the tetraethylenepentamine, the mixture was stirred for 16 hours at 95 °C instead of 65 °C.

### Preparation of developing agent dispersion DEVELOP

DEVELOP was prepared as follows: In Pot A, 55 g of Arlo, 4.4 g Proxel Ultra 5 and 366.674 MOW were added to 524.601 g water. The mixture was stirred for 5 minutes at 50°C in order to dissolve all components.

In Pot B, 10.725 g 4,4'-Thiobis(6-tert-butyl-m-cresol, 10.725 g Ralox 46, 33 g Tinuvin 928, 8.25 g DISFLAMOLL TKP, 4.125 g Ethyl Maleate (commercially available from TCI Europe) and 181.5 g Zinc 3,5-bis(alpha methylbenzyl) salicylate were added to 495 g ethyl acetate. The mixture was stirred for 30 minutes at 50°C in order to dissolve all components.

While Pot A was stirred with a HOMO-REX high speed homogenizing mixer, the solution in Pot B was added to Pot A. The mixture was further stirred during 5 minutes with the HOMO-REX mixer. Ethyl acetate was removed from the mixture under reduced pressure.

### Preparation of the Laser markable laminates LM-01 to LM-08

The laser markable compositions LMC-01 to LMC-08 were prepared by mixing 1.32 g. of respectively LD DISP-01 to 08 with 2.64 g DEVELOP and 11 g of a 12 wt% MOW 48 8 solution.

The laser markable laminates LM-01 to LM-08 were prepared by coating the laser markable compositions LMC-01 to LMC-08 with an Elcometer Bird Film Applicator (from ELCOMETER INSTRUMENTS) on the subbed side of the PET-C support at a wet coating thickness of 50 µm and dried at 50 °C for 5 minutes in a circulation oven.

### Experimental Methods

### Solvent Resistance

0.2 grams of the encapsulated leuco dye dispersions were added to 2.4 grams of water, 0.2 grams of butyl glycol and 0.4 grams of DEVELOP. The mixtures were visually evaluated after 1 hour, 3.5 hours and 24 hours.

A poor solvent resistance of the capsules resulted in colour formation, due to the reaction of the leuco dye with the developer when the capsule were affected by the solvent.

The results were evaluated visually:
- : a significant colour shift
+ : a minor colour shift
++ : no colour shift

The solvent resistance results are given in Table 4 below.

### Heat resistance

The heat resistance of the capsules were evaluated by lamination of the laser markable laminats LM-01 to LM-08 on a white, opaque, 500 µm PET support from WOLFEN, wherein the coated side of the laser markable laminates faced the white opaque support.

Three laminations at different temperatures were performed using an OASYS OLA 6H laminator with the following step programs:
Lamination program 1
   - Step 1: 120°C - 21 PSI - 55 s
   - Step 2: 120°C - 40 PSI - 55 s
   - Step 3: 120°C - 55 PSI - 55 s
   - Step 4: 120°C - 65 PSI - 55 s
   - Step 5: 100°C - 200 PSI - 45 °C - 20 s
Lamination program 2
   - Step 1: 140°C - 21 PSI - 55 s
   - Step 2: 140°C - 40 PSI - 55 s
   - Step 3: 140°C - 55 PSI - 55 s
   - Step 4: 140°C - 65 PSI - 55 s
   - Step 5: 100°C - 200 PSI - 45 °C - 20 s
Lamination program 3
   - Step 1: 160°C - 21 PSI - 55 s
   - Step 2: 160°C - 40 PSI - 55 s
   - Step 3: 160°C - 55 PSI - 55 s
   - Step 4: 160°C - 65 PSI - 55 s
   - Step 5: 100°C - 200 PSI - 45 °C - 20 s

The results were evaluated by measuring the L value after lamination. A high L value (white) means that the laser markable remains transparent after lamination, i.e. no colour formation, resulting in a white colour due to the white support. In Table 4 below an L value below 25 is referred to as black, a value between 25 and 90 as grey and a value above 90 as white.

### Results

The results of the solvent test and the lamination test described above are summarized in Table 4. LD DISP 01, LD DISP 05, LD DISP 02, LD DISP 06, LD DISP 03 and LD DISP 07 are reference examples.

**Table 4**

| **LD DISP** | **Polyisocyanate** | **Process T (°C)** | **Solvent test: time** | | | **Lamination test: L value** | | |
|---|---|---|---|---|---|---|---|---|
| | | | **1 h** | **24 h** | **1 w** | **1** (120 °C) | **2** (140 °C) | **3** (160 °C) |
| **01** | Takenate D140N | 65 | - | - | - | Black | Black | Black |
| **05** | Takenate D140N | 95 | + | - | - | White | Grey | Black |
| **02** | Takenate D120N | 65 | ++ | + | - | White | Black | Black |
| **06** | Takenate D120N | 95 | ++ | + | + | White | Grey | Black |
| **03** | Takenate D110N | 65 | ++ | + | - | White | Grey | Black |
| **07** | Takenate D110N | 95 | ++ | ++ | + | White | Grey | Black |
| **04** | Takenate D131N | 65 | ++ | ++ | ++ | White | Grey | Black |
| **08** | Takenate D131N | 95 | ++ | ++ | ++ | White | White | White |

From Table 4 it is clear that:
- Capsules prepared via interfacial polymerization of a polyisocyanate according to Formula I have an improved solvent resistance.
- Capsules prepared via interfacial polymerization of a polyisocyanate according to Formula I have an improved mechanical strength.
- A higher process temperature for the preparation of microcapsules, prepared via interfacial polymerization of a multifunctional isocyanate, improves the solvent resistance of the capsule.
- A higher process temperature for the preparation of microcapsules, prepared via interfacial polymerization of a polyisocyanate, improves the mechanical strength of the capsule.
- Capsules prepared via interfacial polymerization of a polyisocyanate at a high process temperature have the best solvent resistance and the best mechanical strength.

## Claims

1. A composition comprising a capsule including a core and a shell, wherein the capsule is prepared via interfacial polymerization of a polyisocyanate and a compound including an active hydrogen, **characterized in that** the polyisocyanate is a compound having a chemical structure according to Formula IV, 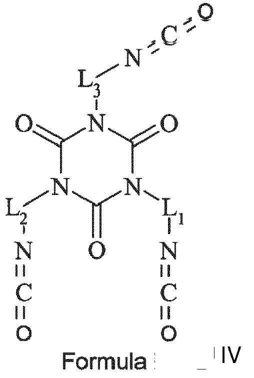 wherein
L1, L2 and L3 are linking groups comprising a substituted or unsubstituted arylene or heteroarylene group.

2. The composition according to claim 1 wherein the polyisocyanate has a Molecular Weight (Mw) of 1500 or less.

3. The composition according to claim 1 or 2 wherein the substituted or unsubstituted arylene group is a substituted or unsubstituted phenylene group.

4. The composition according to any of the preceding claims wherein the compound including an active hydrogen is a polyamine, a polyhydrazide or a polyol.

5. The composition according to any of the preceding claims comprising a leuco dye in the core of the capsule.

6. The composition according to claim 5 further comprising an optothermal converting agent and a developing agent.

7. A method of preparing a laser markable article including the step of providing a composition according to claim 5 or 6 on a support.

8. The method of preparing a laser markable article according to claim 7 wherein the composition is provided on a support by intaglio printing, screen printing, flexographic printing, offset printing, inkjet printing, or rotogravure printing.

9. The method of preparing a laser markable article according to claim 7 or 8 wherein the article is selected from the group consisting of a packaging, a foil, a laminate, a security document, a label, a decorative object and an RFID tag.

10. A method of preparing a laser marked article comprising the step of exposing a laser markable article obtained with a method as defined in any of the claims 7 to 9 with an infrared laser thereby forming a laser marked image.

## Patentansprüche

1. Eine Zusammensetzung, umfassend eine Kapsel, enthaltend einen Kern und eine Hülle, wobei die Kapsel durch Grenzflächenpolymerisation eines Polyisocyanats und einer einen aktiven Wasserstoff enthaltenden Verbindung hergestellt wird, **dadurch gekennzeichnet, dass** das Polyisocyanat eine Verbindung mit einer chemischen Struktur gemäß Formel IV ist: 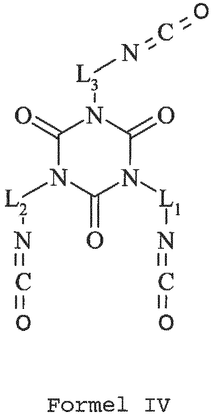 in der
L1, L2 und L3 Verbindungsgruppen sind, die eine substituierte oder nicht-substituierte Arylen- oder Heteroarylengruppe umfassen.

2. Die Zusammensetzung nach Anspruch 1, wobei das Molekulargewicht (Mw) des Polyisocyanats bei 1.500 oder weniger liegt.

3. Die Zusammensetzung nach Anspruch 1 oder 2, wobei die substituierte oder nicht-substituierte Arylen- oder Heteroarylengruppe eine substituierte oder nicht-substituierte Phenylengruppe ist.

4. Die Zusammensetzung nach einem der vorstehenden Ansprüche, wobei die einen aktiven Wasserstoff enthaltende Verbindung ein Polyamin, ein Polyhydrazid oder ein Polyol ist.

5. Die Zusammensetzung nach einem der vorstehenden Ansprüche, die im Kern der Kapsel einen Leukofarbstoff enthält.

6. Die Zusammensetzung nach Anspruch 5, die ferner ein optothermisches Umwandlungsmittel und einen Entwickler enthält.

7. Ein Verfahren zur Herstellung eines lasermarkierbaren Artikels, umfassend den Schritt, in dem eine Zusammensetzung nach Anspruch 5 oder 6 auf einen Träger aufgetragen wird.

8. Das Verfahren zur Herstellung eines lasermarkierbaren Artikels nach Anspruch 7, wobei die Zusammensetzung durch Tiefdruck, Siebdruck, Flexodruck, Offsetdruck, Tintenstrahldruck oder Rotationstiefdruck auf einen Träger aufgetragen wird.

9. Das Verfahren zur Herstellung eines lasermarkierbaren Artikels nach Anspruch 7 oder 8, wobei der Artikel aus der Gruppe bestehend aus einer Verpackung, einer Folie, einem Laminat, einem Sicherheitsdokument, einem Etikett, einem dekorativen Gegenstand und einem RFID-Tag ausgewählt wird.

10. Ein Verfahren zur Herstellung eines lasermarkierten Artikels, umfassend den Schritt, in dem ein wie nach einem der Ansprüche 7 bis 9 definierter lasermarkierbarer Artikel mit einem Infrarotlaser belichtet wird und dabei ein lasermarkiertes Bild erzeugt wird.

## Revendications

1. Composition comprenant une capsule contenant un cœur et une enveloppe, **caractérisée en ce que** la capsule est préparée par polymérisation interfaciale d'un polyisocyanate et d'un composé contenant un hydrogène actif, **caractérisée en ce que** le polyisocyanate est un composé ayant une structure chimique répondant à la Formule IV: 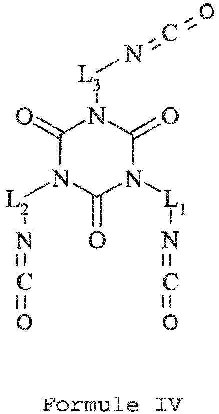 où
L1, L2 et L3 sont des groupes de liaison comprenant un groupe arylène ou hétéroarylène substitué ou non substitué.

2. Composition selon la revendication 1, **caractérisée en ce que** le poids moléculaire (Mw) du polyisocyanate est égal ou inférieur à 1.500.

3. Composition selon la revendication 1 ou 2, **caractérisée en ce que** le groupe arylène ou hétéroarylène substitué ou non substitué est un groupe phénylène substitué ou non substitué.

4. Composition selon l'une quelconque des revendications précédentes, **caractérisée en ce que** le composé contenant un hydrogène actif est une polyamine, un polyhydrazide ou un polyol.

5. Composition selon l'une quelconque des revendications précédentes contenant un colorant leuco dans le cœur de la capsule.

6. Composition selon la revendication 5 contenant en outre un agent de conversion optothermique et un révélateur.

7. Procédé pour la production d'un article marquable au laser, comprenant l'étape dans laquelle une composition selon la revendication 5 ou 6 est appliquée sur un support.

8. Procédé pour la production d'un article marquable au laser selon la revendication 7, **caractérisé en ce que** la composition est appliquée sur un support par impression en héliogravure, impression sérigraphique, impression flexographique, impression offset, impression à jet d'encre ou impression en héliogravure rotative.

9. Procédé pour la production d'un article marquable au laser selon la revendication 7 ou 8, **caractérisé en ce que** l'article est choisi parmi le groupe composé d'un emballage, d'une feuille, d'un stratifié, d'un document de sécurité, d'une étiquette, d'un objet décoratif et d'une étiquette RFID.

10. Procédé pour la production d'un article marqué au laser, comprenant l'étape consistant à exposer un article marquable au laser tel que défini selon l'une quelconque des revendications 7 à 9 à l'aide d'un laser infrarouge et à générer ainsi une image marquée au laser.
